# Europäisches Patentamt

## European Patent Office

## Office européen des brevets

(19)

(11) Veröffentlichungsnummer : **0 531 566 B1**

(12)

# EUROPÄISCHE PATENTSCHRIFT

(45) Veröffentlichungstag der Patentschrift :
06.07.94 Patentblatt 94/27

(51) Int. Cl.$^5$ : **G01T 1/29**

(21) Anmeldenummer : **91115370.8**

(22) Anmeldetag : **11.09.91**

(54) **Verfahren zur schnellen Ortung mit dem Maximum Likelihood-Estimator bei einer Gamma-Kamera.**

(43) Veröffentlichungstag der Anmeldung :
17.03.93 Patentblatt 93/11

(45) Bekanntmachung des Hinweises auf die
Patenterteilung :
06.07.94 Patentblatt 94/27

(84) Benannte Vertragsstaaten :
**DE FR GB**

(56) Entgegenhaltungen :
**EP-A- 0 155 463**
**EP-A- 0 252 566**
**EP-A- 0 387 800**

(56) Entgegenhaltungen :
**THE JOURNAL OF NUCLEAR MEDICINE, Bd.**
**31, Nr. 4, April 1990, Seiten 632-639; T.D. Mil-**
**ster et al: "A Full-Field Modular Gamma Ca-**
**mera"**

(73) Patentinhaber : **SIEMENS**
**AKTIENGESELLSCHAFT**
**Wittelsbacherplatz 2**
**D-80333 München (DE)**

(72) Erfinder : **Klingenbeck-Regn, Klaus, Dr.**
**Reichstrasse 4**
**W-8500 Nürnberg (DE)**
Erfinder : **Conrad, Bernhard, Dipl.-Phys.**
**Rosenau 19**
**W-8520 Erlangen (DE)**

## Beschreibung

Die Erfindung betrifft zwei Verfahren zur Ortung eines Szintillationsereignisses in einer Gamma-Kamera mit einer über einer Kamerafläche angeordneten Anzahl von Photomultiplizierern, aus deren Ausgangssignalen zusammen mit Vergleichssignalsätzen, die von Vergleichs-Szintillationsereignissen mit ortsbekannten Ursprüngen erzeugt worden sind, eine ortsabhängige Wahrscheinlichkeitsfunktion gebildet wird, wobei der Ort des Maximums der Wahrscheinlichkeitsfunktion als Ort des Szintillationsereignisses registriert wird.

Mit einer Gamma-Kamera werden Zerfallsquanten von Radioisotopen in einem Untersuchungsobjekt nachgewiesen. Dabei wird in einem Szintillationskristall, meist aus Natriumjodid (NaJ(Tl)), die Energie des absorbierten Gamma-Quants von typisch 140 keV für $^{99}$Tc in Licht umgewandelt. Dieses Szintillationslicht wird über einen Lichtleiter, z.B. eine Glasplatte aus Pyrex, auf eine Anzahl von Photomultiplizierern verteilt, deren elektrische Ausgangssignale zur Bestimmung des Absorptionsortes verwendet werden. Bei der heute üblichen Gamma- oder Angerkamera wird eine Ortung nach dem Schwerpunktsprinzip durchgeführt. Der Absorptionsort ergibt sich dabei aus der Summe der gewichteten Einzelsignale der Photomultiplizierer dividiert durch die Summe der Signale aller Photomultiplizierer. Der Gewichtsfaktor wird durch die Lage des entsprechenden Photomultiplizierers relativ zu einem Koordinatenursprung auf der Kamerafläche gewählt. Die Division durch das Summensignal sorgt dafür, daß die Ortung möglichst unabhängig von Schwankungen in der Lichtausbeute wird.

Die Ortung nach dem Schwerpunktsprinzip wird üblicherweise mit analogen Schaltkreisen realisiert, indem die Ausgangssignale der Photomultiplizierer nach einer durch Widerstände realisierten Wichtung aufsummiert werden. Neben der resistiven Wichtung sind auch Verfahren mit einer kapazitiven Wichtung der Ausgangssignale bekannt. Auch das Summensignal wird durch analoge Summierung gebildet. Hauptsächlicher Nachteil dieser Schwerpunktsortung ist, daß damit der Absorptionsort nur unter gewissen Bedingungen richtig wiedergegeben wird, z.B. wird in Randbereichen des Kristalls die Symmetrie der Signalverteilung durch Lichtreflexion am Kristallrand gestört, so daß Fehlortungen entstehen. Darüber hinaus ist für einen Absorptionsort am Rand die Anordnung der Photomultiplizierer einseitig zum Kristallinneren hin gewichtet, was dazu führt, daß die Schwerpunktsortung im Randbereich überhaupt versagt. Dies wird bei heutigen Gamma-Kamera-Konstuktionen zum Teil kompensiert, indem der Lichtleiter und die Photomultiplizierer über den Kristallrand überstehen. Die Folge ist, daß bei der Gamma-Kamera mit analoger Schwerpunktsortung ein nicht für die Abbildung nutzbarer Rand verbleibt, der erfahrungsgemäß die Ausdehnung von ca. dem 1,5-fachen Radius eines Photomultiplizierers besitzt.

Ein Verfahren, das trotz solcher Randeffekte eine Ortung erlaubt, ist in einem Artikel von Milster et al.: "A Full Field Modular Gamma-Camera" in The Journal of Nuclear Medicine, Vol. 31, No. 4, 1990, pp 632-639 angegeben. Durch Digitalisierung der Ausgangssignale der Photomultiplizierer direkt nach einer Vorverstärkung können digitale und nichtlineare Ortungsverfahren verwendet werden. Diese ermöglichen es dann, die Ortung direkt bis zum Kristallrand hin auszudehnen und eröffnen damit auch Möglichkeiten für einen modularen Aufbau praktisch beliebiger Kamera-Geometrien.

Als digitales Ortungsverfahren hat sich die Wahrscheinlichkeitsfunktion oder der Maximum Likelihood Estimator bewährt, andere Verfahren wie Minimum Mean Square Error erwiesen sich als praktisch equivalent.

Aus der genannten Literaturstelle Milster et al. ist die Realisierung des Maximum-Likelihood-Estimator-Verfahrens auf der Grundlage des Poisson-Modells für statistischen Fluktuationen der Ausgangssignale der Photomultiplizierer bekannt. Für jede mögliche Kombination der Ausgangssignale wird der wahrscheinlichste Ort in Form einer Look-up-Tabelle in einem Speicher abgelegt. Jede Position in der Look-up-Tabelle ist zusätzlich markiert, ob der Wert der Likelihood-Funktion in ein bestimmtes Likelihood-Fenster fällt. Diese bekannte Realisierung des Maximum-Likelihood-Estimator-Verfahrens hat den Vorteil, daß über die Look-up-Tabelle die Ortung sehr schnell erfolgen kann. Der Nachteil dabei ist, daß aus Gründen des Speicherbedarfs für die Look-up-Tabelle die Anwendung auf KameraModule mit wenigen Photomultiplizierern und geringer Bittiefe für die entsprechenden Signale beschränkt ist. Zum Beispiel ist für eine Kamera- oder Meßfläche von 10 x 10 cm$^2$ mit vier Photomultipliziereren und einer 5-Bit-Darstellung der Ausgangssignale der Photomultiplizierer ein Speicher für die Look-up-Tabelle von 2 Megabyte erforderlich. Nur geringfügige Erweiterungen führen bereits zu drastisch höherem Speicherbedarf. So werden für 4 Photomultiplizierer bei einer 8 Bit-Digitalisierung 8 Gigabyte benötigt, während für 8 Photomultiplizierer mit einer 5-Bit-Digitalisierung 2048 Gigabyte erforderlich sind. Für noch größere Module und/oder höhere Genauigkeit der Quantisierung steigt der Speicherbedarf ins Unermeßliche.

Der Erfindung liegt daher die Aufgabe zugrunde, ein Verfahren für eine Gamma-Kamera anzugeben, mit dem eine schnelle Ortung mit der Wahrscheinlichkeitsfunktion mit hoher Ortsgenauigkeit auch bei großen Kameraflächen und einer großen Anzahl von Photomultiplizierern möglich ist.

Die Aufgabe wird in einem ersten Verfahren gemäß Patentanspruch 1 dadurch gelöst, daß durch eine grobe Vorortung zunächst eine Kamerateilfläche vorgegeben wird, in der mit großer Wahrscheinlichkeit der Ort des Szintillationserereignisses liegt und in der dann mit Hilfe der Wahrscheinlichkeitsfunktion der Ort des Szintillationsereignisses bestimmt wird. Mit diesem Verfahren wird die Ortung über die Wahrscheinlichkeitsfunktion auf ein Gebiet eingeschränkt, in dem mit großer Wahrscheinlichkeit das Szintillationsereignis liegt. Dieses Ortungsverfahren ist unabhängig von der Größe der Kamerafläche und der Anzahl der Photomultiplizierer. Somit läßt sich eine schnelle Ortung mit hoher Genauigkeit auch bei großen Kameraflächen durchführen.

Bei einer vorteilhaften Ausgestaltung des ersten Verfahrens umfaßt die Kamerateilfläche mindestens die Beobachtungsfläche des Photomultiplizierers, dessen Ausgangssignal am größten ist. Damit ist eine grobe Vorortung einfach und schnell realisiert.

Bei einer besonders vorteilhaften Ausgestaltung des ersten Verfahrens wird in einem ersten Schritt in dieser Kamerateilfläche zunächst die Wahrscheinlichkeitsfunktion in einem groben Raster bestimmt und dann in einem zweiten Schritt um den Rasterpunkt mit dem größten Wert der Wahrscheinlichkeitsfunktion eine zweite, kleinere Kamerateilfläche gelegt, in der dann in einem feineren Raster die Wahrscheinlichkeitsfunktion bestimmt wird. Mit diesem Verfahren wird die Anzahl der zu bestimmenden Werte der Wahrscheinlichkeitsfunktion weiter verringert und damit die Ortung schneller, ohne daß die Ortungsgenauigkeit darunter leidet.

Die Aufgabe wird bei einem zweiten Verfahren gemäß Patentanspruch 8 dadurch gelöst, daß die Ankoppelfläche in sich gegenseitig überlappende Teilflächen aufgeteilt ist, daß innerhalb jeder Teilfläche an einem Punkt die Wahrscheinlichkeitsfunktion bestimmt wird, und daß die Teilfläche, in der die Wahrscheinlichkeitsfunktion den größten Wert hat, weiter in sich gegenseitig überlappende Teilflächen unterteilt wird, wobei die Unterteilung abgebrochen wird, wenn die Seitenlänge der Teilflächen den Abstand der Vergleichs-Szintillationsereignisse erreicht hat. Die zu untersuchenden Flächen sind so sehr schnell verkleinert, weil nur diejenige Fläche weiter betrachtet wird, in dem der maximale Wert der Wahrscheinlichkeitsfunktion liegt. Mit diesem zweiten Ortungsverfahren läßt sich ebenfalls eine schnelle Ortung mit hoher Ortungsgenauigkeit bei großen Kameraflächen und einer großen Anzahl von Photomultiplizierern realisieren.

In einer besonders vorteilhaften Ausgestaltung des zweiten Verfahrens entstehen die Seitenlängen einer Teilfläche aus den Seiten der Ankoppelfläche bzw. größeren Teilfläche durch Teilung nach dem Goldenen Schnitt. Dieses Ortungsverfahren ist optimal in dem Sinne, daß es mit größter Sicherheit das Maximum findet.

Eine besonders vorteilhafte Realisierung der beiden Ortungsverfahren zeichnet sich dadurch aus, daß jeder Vergleichssignalsatz die Mittelwerte der Ausgangssignale eines Vergleichs-Szintillationsereignisses umfaßt, daß die Wahrscheinlichkeitsfunktion jeweils aus den Wahrscheinlichkeiten berechnet wird, die die Ausgangssignale aller Photomultiplizierer aufweisen, und daß die Wahrscheinlichkeit eines Ausgangssignals jeweils aus dem Mittelwert und dem Ausgangssignal über eine Verteilungsfunktion berechnet wird. Die on-Line-Berechnung der Wahrscheinlichkeitsfunktion ermöglichkeit eine Ortung ohne großen Speicherplatzbedarf.

Eine Steigerung der Genauigkeit und eine schnellere Ortung läßt sich in einer weiteren Ausführung der beiden Ortungsverfahren dadurch erreichen, daß jeder Vergleichssignalsatz die Standardabweichungen der Ausgangssignale der Vergleichs-Szintillationsereignisse umfaßt und daß die Verteilungsfunktion eine Gaußsche Verteilungsfunktion ist. Bei der Poisson-Verteilung ist die Standardabweichung bis auf den Fano-Faktor von der Wurzel des Mittelwerts bestimmt. Dieser Zusammenhang gilt jedoch nur unter idealisierten Bedingungen, die in der Praxis nicht vorliegen, wie gleiche Photokathodenempfindlichkeit und gleiche Verstärkung der Photomultiplizierer. Dagegen handelt es sich bei der Gauß-Verteilung im Gegensatz zum Poisson-Modell um eine zweiparametrige Verteilung. Die Ungleichheiten können durch den zweiten Parameter im wesentlichen berücksichtigt werden, so daß der Absorptionsort genauer bestimmt werden kann. Die schnellere Ortung bei Verwendung der Gaußschen Verteilung beruht darauf, daß im Gegensatz zur Poisson-Verteilung bei der Berechnung der Likelihood-Funktion keine zeitaufwendige Berechnung von Fakultäten erforderlich ist.

Beiden Verfahren ist gemeinsam, daß nicht für alle Orte der Kamerafläche die Wahrscheinlichkeitsfunktion bestimmt wird, sonderen daß nach einer bestimmten Suchstrategie nur in einer Teilfläche die Wahrscheinlichkeitsfunktion bestimmt wird.

Jeweils ein Ausführungsbeispiel zu den beiden Ortungsverfahren wird im folgenden anhand sechs Figuren erläutert. Es zeigen:

FIG 1 einen prinzipiellen Aufbau des Meßkopfes einer Gamma-Kamera,

FIG 2 ein Blockschaltbild einer digitalen Kamera,

FIG 3 ein Prinzip einer groben Vorortung mit anschließender Ortung des Maximums der Wahrscheinlichkeitsfunktion in einem groben Raster,

FIG 4 ein weiterer Schritt zur Ortung in einem feineren Raster,

FIG 5 ein letzter Schritt zur Ortung in einem Raster, das dem Abstand von Vergleichs-Szintillationsereignissen entspricht,

FIG 6    ein Ortungsverfahren durch Bildung von überlappenden Teilflächen nach dem Goldenen Schnitt.

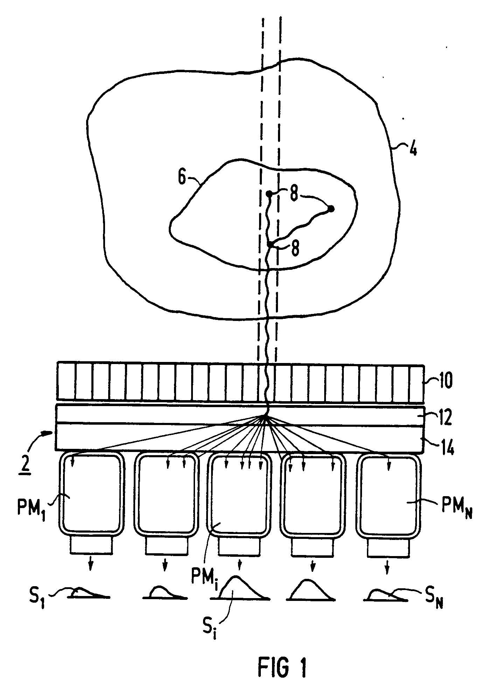

Der in FIG 1 dargestellte prinzipielle Aufbau eines Meßkopfes 2 einer Gamma-Kamera ist auf ein Untersuchungsobjekt 4 ausgerichtet, worin sich ein mit Radioisotopen, z.B. $^{99}$Tc angereichertes Untersuchungsgebiet 6 befindet. In FIG 1 sind Punkte 8 eingezeichnet, die beispielhaft den Erstehungsort der bei dem Zerfall der Radioisotope entstehenden Gamma-Quanten angegeben. Die Zerfallsquanten werden über einen Kollimator 10 auf einen Szintillationskristall 12 geleitet, der meist aus Natriumjodid (NaJ) besteht.

Im Szintillationskristall 12 wird die Energie von typisch 140 KeV für $^{99}$Tc eines absorbierten Gamma-Quants in Licht umgewandelt. Dieses Szintillationslicht wird über einen Lichtleiter 14, der z.B. aus einer Glasplatte aus Pyrex-Glas besteht, auf eine Anzahl von Photomultiplizierer $PM_I$ bis $PM_N$ verteilt. Die entsprechenden elektrische Ausgangssignale $S_I$ bis $S_N$ werden zur Bestimmung des Absorptionsortes oder des Ortes des Szintillationsereignisses verwendet, wobei die Kamerafläche, in der die Gamma-Quanten absorbiert und geortet werden, im wesentlichen durch die Fläche des Szintillationskristalls 12 bestimmt ist. Es soll noch darauf hingewiesen werden, daß durch die hier verwendeten Ortungsverfahren im Gegensatz zu einer Kamera mit analoger Schwerpunktsortung der Lichtleiter 14 und die Photomultiplizierer $PM_I$ bis $PM_N$ nicht über den Rand des Szintillationskristalls 12 herausragen. Damit eröffnen sich auch Möglichkeiten für einen modularen Aufbau praktisch beliebiger Gamma-Kamera-Geometrien.

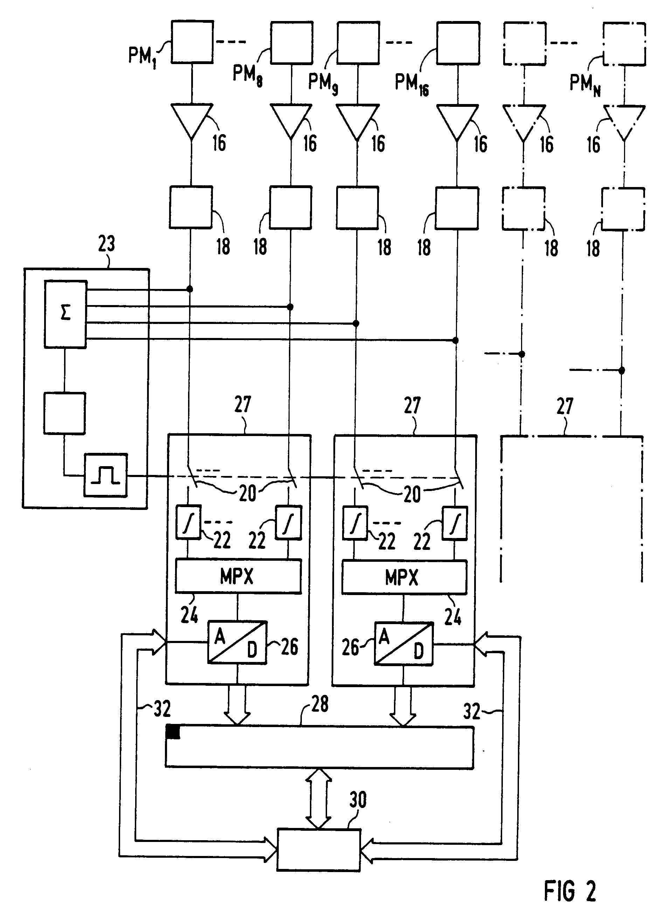

Die sich an die Photomultiplizierer $PM_I$ bis $PM_N$ anschließende Auswertung der Signale $S_I$ bis $S_N$ zur Ortung wird im folgenden anhand des Blockschaltbilds in FIG 2 erläutert. Jeder Photomultiplizierer $PM_I$ bis $PM_N$ ist über einen Vorverstärker 16, einen Hauptverstärker 18, der auch entfallen kann, und anschließend über einen Schalter 20 mit einem Integrator 22 verbunden. Die Ausgänge der Hauptverstärker 18 sind ebenfalls in bekannter Weise mit einer Steuerschaltung 23 verbunden. Diese Steuerschaltung 23 bildet aus den Ausgangssignalen $S_I$ bis $S_N$ der Photomultiplizierer $PM_I$ bis $PM_N$ ein Summensignal oder Energiesignal, das einem Komparator zugeführt ist. Der Komparator stellt fest, ob das Summensignal in einem Bereich liegt, der charakteristisch für das zu ortende Ereignis ist. Der Komparator gibt dann einen Impuls von typisch 0,2 bis 2 μs ab, der die Schalter 22 einschaltet. Während der Einschaltzeit sind die Ausgangssignale $S_I$ bis $S_N$ den Analog-Digital-Wandlern 26 zugeführt. Die impulsförmigen Ausgangssignale $S_I$ bis $S_N$ der Photomultiplizierer $PM_I$ bis $PM_N$ werden integriert, um statistische Unsicherheiten der Impulshöhe zu verringern. Jeweils acht Photomultiplizierer $PM_I$ bis $PM_8$, $PM_9$ bis $PM_{16}$ usw. sind über einen Multiplexer 24 mit einem Analog-Digital-Wandler 26 verbunden.

Dabei bilden jeweils ein Analog-Digital-Wandler 26 mit dem dazugehörigen Multiplexer 24 und den damit verbundenen Integratoren 22 und Schaltern 20 ein Modul 27. In FIG 2 sind zwei Module 27 gezeigt, jedoch können weitere Module 27 und damit auch weitere Photomultiplizierer, hier durch die gestrichelte Umrandung angedeutet, in der Gamma-Kamera vorgesehen sein.

Anstatt eines für jeweils acht Photomultiplizierer gemeinsamen Analog-Digital-Wandlers 26 kann auch jedem Photomultiplizierer ein eigener Analog-Digital-Wandler zugeordnet sein. Dann entfallen die Multiplexer 24.

Die integrierten und digitalisierten Ausgangssignale werden in einem Speicher 28 abgespeichert, um den Ort des Szintillationsereignisses zu bestimmen. Dazu ist der Speicher 28 über einen Datenbus 29 mit einem Likelihood-Prozessor 30 verbunden, der über einen weiteren Datenbus 32 auch mit den Analog-Digital-Wandlern 26 in den Modulen kommuniziert.

Im folgenden ist nun das digitale Ortungsverfahren mit dem Maximum-Likelihood-Estimator beschrieben. Grundlagen des Maximum-Likelihood-Estimator-Verfahrens sind:

1. Ein Ereignis, wie die Absorption eines Quants an einem unbekannten Ort, ist definiert durch einen Vektor $(S_I,...,S_N)$, dessen Komponenten die Ausgangssignale $S_i$ der einzelnen Photomultiplizierer $PM_i$ sind, wobei $i = I,...,N$ ist. Der Vektor $(S_I,...,S_N)$ wird im folgenden auch als Muster bezeichnet und liegt pro Ereignis in digitaler Form in dem Speicher 28 vor.

2. Für eine Klasse von Ereignissen, z.B. primäre Gamma-Quanten, sind mittlere Signalvektoren $(\overline{S}_I(x, y),...,\overline{S}_N(x, y))$ an in einem Raster angeordneten Orten x, y auf der Kamerafläche bekannt. Derartige mittlere Signalvektoren oder auch mittlere Muster können z.B. gemessen werden, indem die Meßfläche der Kamera mit einer kollimierten Gamma-Quelle an den diskreten Punkten x, y abgetastet wird. Damit werden Vergleichs-Szintillationsereignisse mit ortsbekannten Ursprüngen erzeugt. Durch Mittelung über viele Ereignisse an einem Abtastpunkt $X_k$, $y_l$ können dann die mittleren Signale $\overline{S}_i(x_k, y_l)$ als Vergleichssignalsätze $\overline{S}_I(x_k, y_l),...,\overline{S}_N(x_k, y_l)$ ermittelt werden.

3. Der unbekannte Absorptionsort zu einem Ereignis $S_I$ bis $S_N$ wird dadurch bestimmt, daß die Ähnlichkeit des gemessenen Musters mit den mittleren Mustern berechnet wird. Derjenige Ort x, y, für den maximale Ähnlichkeit auftritt, wird mit dem Absorptionsort identifiziert. Die formale Quantifizierung der Ähnlichkeit erfolgt mit der weiter unten definierten ortsabhängigen Likelihood-Funktion L(x, y).

4. Durch Anwendung eines Schwellwertes, den das Maximum der Likelihood-Funktion L(x, y) übersteigen muß (Likelihood-Schwelle), bzw. eines Likelihood-Fenster, innerhalb dessen das Maximum liegen muß, läßt sich erreichen, daß Ereignisse unterdrückt werden, die nicht zu der Klasse von Ereignissen gehören, aus denen die mittleren Muster ermittelt wurden.

Die quantitative Formulierung des Maximum-Likelihood-Estimator-Verfahrens erfordert die Definition der Likelihood-Funktion, die auf der theoretischen Beschreibung der Statistik der Ausgangssignale $S_I$ bis $S_N$ beruht. Bezeichnet $\overline{S}_i(x, y)$ das mittlere Signal des Photomultiplizierers $PM_i$ für die Absorption eines Gamma-Quants am Ort x, y, so ist $P_i(\overline{S}_i(x, y), S_i)$ die Wahrscheinlichkeit, daß der Photomultiplizierer $PM_i$ ein vom mittleren Signal $\overline{S}_I$ abweichendes Signal $S_i$ abgibt. In guter Näherung kann diese Wahrscheinlichkeit $P_i(\overline{S}_i(x, y), S_i)$ als Poisson-Verteilung modelliert werden:

$$P_i(\overline{S}_i(x, y), S_i) = \frac{(\overline{S}_i(x, y))^{S_i}}{S_i !} e^{-\overline{S}(x, y)} \quad (G1.1)$$

Die ortsabhängige Likelihood-Funktion L(x, y) ist definiert als das Produkt dieser Einzelwahrscheinlichkeiten

$$L(x, y) = \prod_{i=i}^{N} P_i(\overline{S}_i(x, y), S_i) \quad (G1.2)$$

und gibt damit die Wahrscheinlichkeit an, daß ein Ereignis am Ort (x, y) den Signalvektor $(S_I...,S_N)$ ergibt, wenn der mittlere Signalvektor durch $(\overline{S}_i(x, y),...,\overline{S}_N(x, y)$ gegeben ist.

Für ein unbekanntes Ereignis $S_I$ bis $S_N$ lautet daher die Ortungsvorschrift, das Maximum von L(x, y) über alle Orte x, y zu bestimmten.

Für die numerische Auswertung der Likelihood-Funktion ist es vorteilhaft, Gleichung 2 zu logarithmieren

$$LL(x, y) = \ln L(x, y) = \sum_{i=1}^{N} \ln P_i(\overline{S}_i(x, y), S_i) \quad (G1.3)$$

Mit den Einzelwahrscheinlichkeiten aus Gleichung 1 ergibt sich dann schließlich:

$$(G1.4)$$
$$\ln L(x, y) = \sum_{i=1}^{N} (S_i \ln \overline{S}_i(x, y) - \overline{S}_i(x, y) - \ln (S_i !))$$

Diese Form des Maximum-Likelihood-Estimators ist jedoch dann ungünstig, wenn die Terme $\ln (S_i!)$ nicht aus einer Look-up-Tabelle ausgelesen werden, sondern jeweils numerisch berechnet werden. Da die Terme $\ln (S_i!)$ aber andererseits vom aktuellen Signalvektor abhängen, sind sie für eine Bestimmung des Wertes der Likelihood-Funktion L für Schwelle oder Fenster unbedingt erforderlich.

Eine für die jeweilige numerische Berechnung günstigere Form des Maximum-Likelihood-Estimators ergibt sich, wenn die Poisson-Verteilung von Gleichung 1 durch eine Gaußsche Verteilung ersetzt wird:

$$P_i(\overline{S}_i(x, y), S_i) = \frac{1}{\sqrt{2\pi}\ \sigma_i(x, y)} e^{-(\overline{S}_i(x, y) - S_i)^2/2\ \sigma_i^2(x, y)} \quad (G1.5)$$

wobei $\sigma_i(x, y)$ die Standardabweichung eines Ereignisses von den mittleren Ereignissen am Ort x, y für den Photomultiplizierer $PM_i$ bezeichnet. Im Gegensatz zum Poisson-Modell handelt es sich hier um eine zweiparametrige Verteilung mit $\overline{S}_i(x, y)$ und $\sigma_i(x, y)$, so daß eine genauere Bestimmung des Absorptionsortes möglich ist. Die zur Wurzel des Mittelwertes proportinale Standardabweichung der Poisson-Verteilung gilt nämlich nur unter idealisierten Bedingungen, die in der Praxis nicht vorliegen, wie gleiche Photokathodenempfindlichkeit und gleiche Verstärkung der Photomultiplizierer. Messungen und Untersuchungen zeigen daß die Maximum-Likelihood-Ortung unter Verwendung des Gaußschen Modells tatsächlich um ca. 5 % genauer gegenüber dem Poisson-Modell ist.

Ein weiterer Vorteil liegt in der numerischen Bestimmung der logarithmierten Likelihood-Funktion LL(x, y), die jetzt lautet:

(G1.6)

$$\ln L(x, y) = - \sum_{i=1}^{N} \ln \left( \sqrt{2\pi} \; \sigma_i(x, y) \right) + \frac{(S_i - \overline{S}_i(x, y))^2}{2 \; \sigma^2(x, y)}$$

Verglichen zu Gleichung 4 entfällt in Gleichung 6 die zeitaufwendige Berechnung von Fakultäten. Der Wert der logarithmierten Likelihood-Funktion LL(x, y) kann auf der Grundlage des Gaußschen Modells schnell numerisch bestimmt werden.

Bei der bisher bekannten Realisierung des Maximum-Likelihood-Estimator-Verfahrens auf der Grundlage des Poisson-Modells wird für jeden möglichen Signalvektor $(S_l,...,S_N)$ der wahrscheinlichste Ort nach Gleichung 4 in Form einer Look-up-Tabelle abgelegt. Diese Realsierung des Maximum-Likelihood-Estimator-Verfahrens hat den Vorteil, daß über die Look-up-Tabelle die Ortung sehr schnell erfolgen kann. Jedoch ist aus Gründen des Speicherbedarfs für die Look-up-Tabelle die Anwendung auf Kamera-Modelle mit wenigen Photomultiplizierern und geringer Bittiefe für die entsprechende Signale beschränkt.

Der bei großen Kameraflächen mit einer hohen Anzahl von Photomultiplizierern benötigte große Speicher wird erheblich vermindert, wenn die zur Ortung benutzte Wahrscheinlichkeitsfunktion jeweils on-line für jedes absorbierte Gamma-Quant berechnet wird. Wie bereits erwähnt, ist hierfür die Gaußsche Verteilungsfunktion besonders günstig, da die rechenintensiven Terme der Poisson-Statistik vermieden werden. Alle Größen in Gleichung 6, die sich auf mittlere Muster beziehen, das sind $\overline{S}_i(x, y)$ und $\sigma_i(x, y)$ bzw. ln $\sigma_i(x, y)$ können nach einem Eichscan mit einer kollimierten Gamma-Quelle vorab berechnet und gespeichert werden. Der Speicherbedarf dafür ist gering, wie die beiden folgenden Beispiele zeigen.

In einem ersten Beispiel wird von einer Modulfläche von 20 x 20 cm² mit einem 4 x 4-Array von Photomultiplizierern ausgegangen. Bei einem Raster der Vergleichs-Szintillationsereignisse mit $\Delta x = \Delta y = 2$ mm ergeben sich 10 000 Vergleichspunkte. Ist der Vergleichssignalsatz mit 16 bit quantisiert, dann sind für die 16 Photomultiplizierer $PM_l$ bis $PM_{16}$ pro Rasterpunkt für die Mittelwerte $\overline{S}_i$ 16 x 2 Byte und für Standardabweichungen $\sigma_i$ ebenfalls 16 x 2 Byte Speicher erforderlich. Die gesamte Mustertabelle für alle Vergleichspunkte benötigt 640 kbyte Speicherplatz.

In einem zweiten Beispiel wird von einer Modulfläche von 30 x 30 cm² mit einem 6 x 6-Array von Photomultiplizierern ausgegangen. Analog zum ersten Beispiel ergeben sich 22 500 Vergleichspunkte und daraus ein Speicherbedarf von ca. 1,4 Mbyte.

Um die Szintillationsereignisse bei der on-line-Berechnung der Likelihood- bzw. logarithmierten Likelihood-Funktion ausreichend schnell zu orten, ist im folgenden eine Strategie beschrieben, die die Anzahl der Berechnungen der Likelihood L(x, y) oder der logarithmierten Likelihood-Funktion LL(x, y) auf dem vorgebenen Raster minimiert. Ohne jegliche Strategie erfordert die Lokalisierung eines einzigen Quants die Berechnung der Wahrscheinlichkeitsfunktion L(x, y) oder LL(x, y) an jedem Rasterpunkt und zusätzlich das Aufsuchen des Maximums dieser Funktion. Für das erste Beispiel ergibt sich dann eine Rechenzeit von ca. 1-2 Sekunden pro Ereignis, wenn eine allgemeine Workstation ohne spezialisierte Hardware verwendet wird.

Durch gezielte Ortungs- oder Suchstrategien lassen sich bei gleicher Genauigkeit bei der Ortung die Rechenzeiten um mehrere Zehnerpotenzen reduzieren. Allen diesen Strategien ist gemeinsam, daß die Wahrscheinlichkeitsfunktion nicht mehr an allen Vergleichspunkten berechnet wird. Bei der ersten Strategie wird durch eine grobe Vorortung zunächst der Suchbereich eingeschränkt, innerhalb dessen dann die Ortung über die Wahrscheinlichkeitsfunktion zur genaueren Bestimmung des Absorptionsortes angewandt wird. Bei der zweiten Strategie schließt das Suchverfahren - evtl. kombiniert mit Interpolationen - in jedem Teilschritt bereits größere Teilflächen der Kamera aus, in denen das Maximum der Wahrscheinlichkeitsfunktion nur sehr unwahrscheinlich liegt.

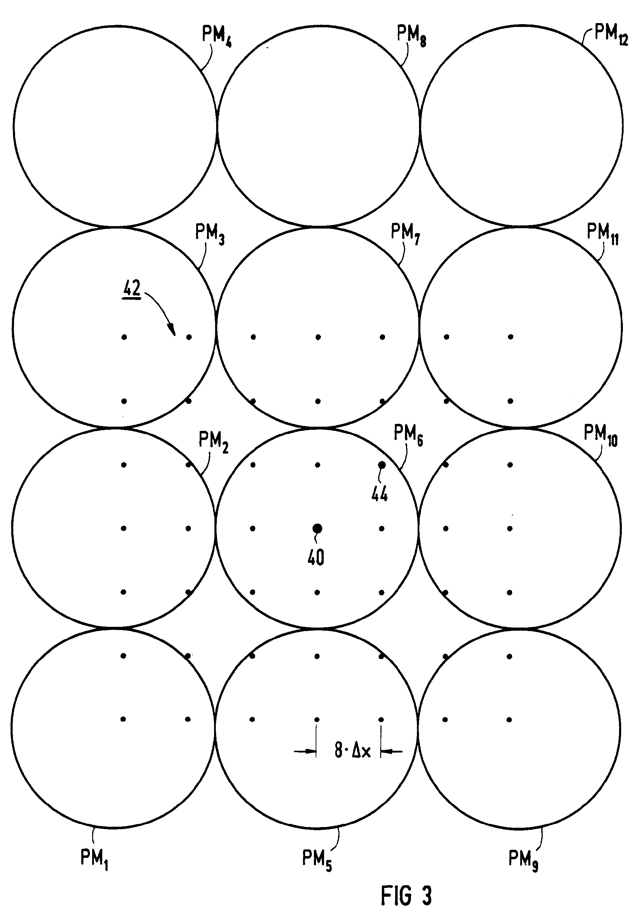

Anhand der Figuren 3 bis 5 soll zunächst das Prinzip der Grob- und Feinortung erläutert werden. Bei der Grobortung wird vom Zentrum des jenigen Photomultiplizierers $PM_i$ ausgegangen, dessen Ausgangssignal $S_i$ am größten ist. In der FIG 1 wäre das der mittlere Photomultiplzierer. Diese Grobortung wird als nullte Näherung des Absorptionsortes betrachtet. In FIG 3 ist nun ein Auschnitt des Meßkopfes 2 einer Gamma-Kamera gezeigt mit den Photomultiplizierern $PM_l$ bis $PM_{12}$. Das hier beschriebene Ortungsverfahren ist unabhängig von der tatsächlichen Anzahl der Photomultiplizierer in der Kamerafläche. Hier wird angenommen, daß der Photomultiplizierer $PM_6$ das größte Ausgangssignal in Folge eines Szintillationsereignisses im Kristall 12 (hier nicht dargestellt) abgibt. Als Grobortung oder nullte Näherung des Absorptionsorts wird das Zentrum 40 des Photomultiplizieres $PM_6$ betrachtet. Um diesen Grobort 40 wird nun ein grobes Raster von Abtastpunkten 42 mit einer Maschenweite von z.B. 8 x $\Delta x$ gelegt, wobei $\Delta x$ der Abstand der Vergleichsszintillationsereignisse ist. Die Rasterpunkte liegen in einer quadratischen Matrix, deren Mittelpunkt mit dem Mittelpunkt 40 des Photomultiplizieres $PM_6$ zusammenfällt. Die Seitenlänge des Rasters beträgt ungefähr den zweifachen Durchmesser der Photomultlplizierer PM. In einem ersten Schritt werden nun die Werte der Wahrscheinlihckeitsfunktion für jeden Rasterpunkt 42 des groben Rasters berechnet. Der maximale Wert der Wahrscheinlichkeitsfunktion wird nun als erste Näherung 44 für den Absorptionsort betrachtet.

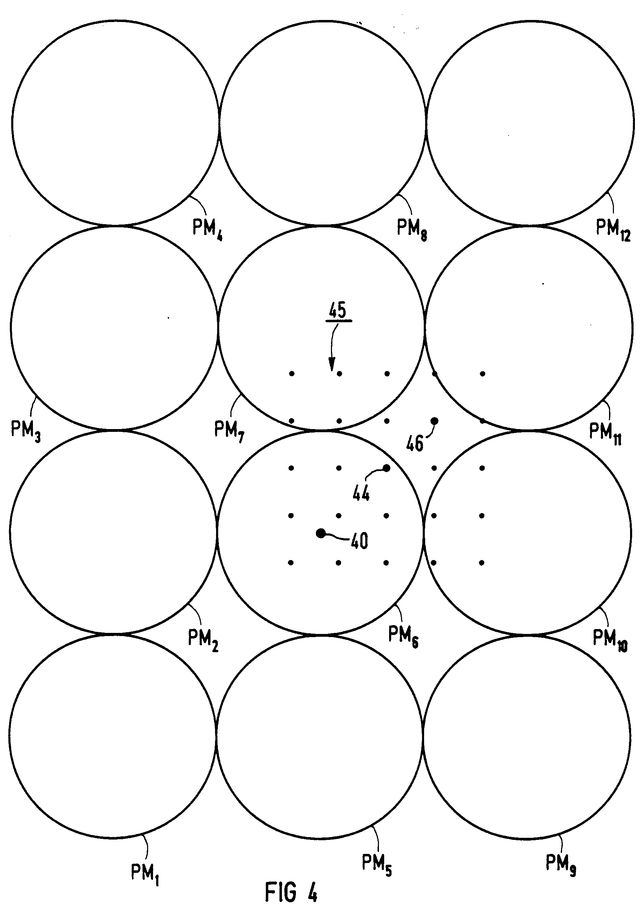

Um den in erster Näherung gefundenen Absorptionsort 44 wird nun ein verfeinertes Raster 45 mit einer Maschenweite von z.B. 6 x $\Delta$x gelegt und weiter analog zum ersten Schritt ein zweiter Näherungswert 46 bestimmt, vgl. FIG 4. Auch hier ist der in der ersten Näherung gefundene Absorptionsort 44 der Mittelpunkt des quadratischen Rasters 45.

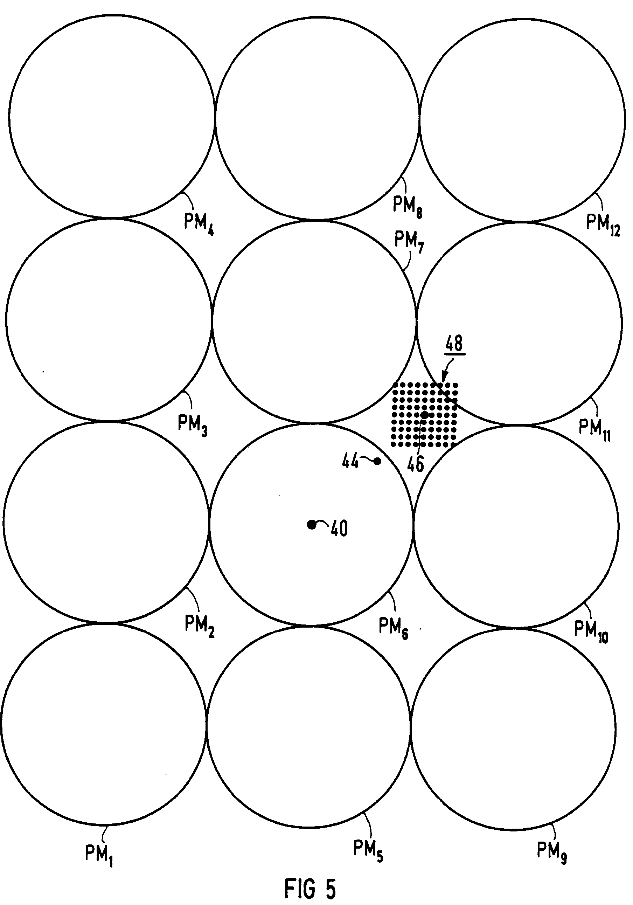

In FIG 5 ist nun der letzte Schritt zur Ortung des Szintillationsereignisses angegeben. Mit dem Ort 46 als Mittelpunkt wird nun ein feines, quadratischen Raster mit einer Maschenweite von $\Delta$x gelegt. Dies ergibt den endgültigen Szintillationsort. Bei den in den Figuren 3 bis 5 gewählten Rasterabständen sind die Rasterpunkte der einzelnen Schritten untereinander niemals gleich.

Bei diesem ersten Ortungsverfahren ist die Anzahl von Rasterpunkten im ersten Schritt 7 x 7 und im zweiten und dritten Schritt 5 x 5. Damit kann die Ortung mit 100 Berechnungen der Likelihood-Funktion ausgeführt werden und ist somit bei gleicher Hardware um einen Faktor 100 schneller, als bei einer vollständigen Suche über alle Abtastpunkte im Beispiel 1. Ein weiterer Vorteil dieses Verfahrens ist, daß sich bei dieser Strategie bei einer Vergrößerung der Kamerafläche, wie z.B. im Beispiel 2, die Zahl der Abtastpunkte, an denen die Likelihood-Funktion zu berechnen ist, nicht weiter erhöht.

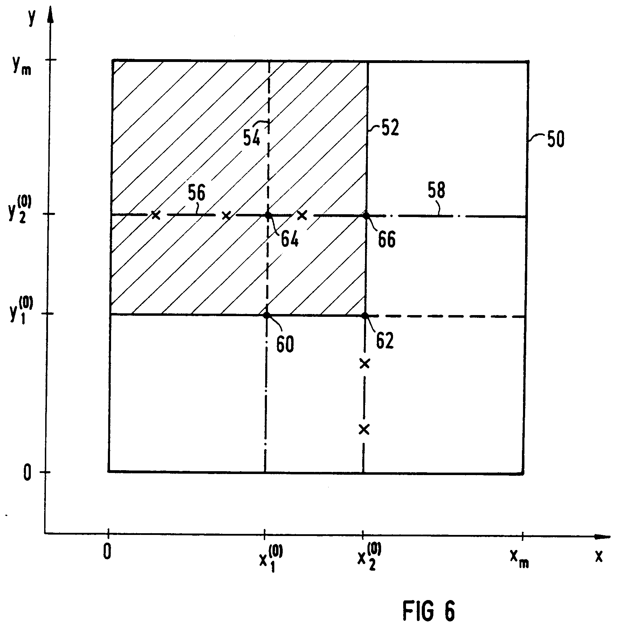

Die nun anhand von FIG 6 erläuterte zweite Ortungsstrategie macht Gebrauch von einem Verfahren, daß auf einer Teilung der Intevalle, innerhalb derer das Maximum gesucht wird, nach dem Goldenen Schnitt beruht. Die Kamerafläche ist in FIG 6 durch ein Quadrat 50 dargestellt, dessen Seiten sich in einem rechtwinkligen Koordinatensystem von 0 bis $x_m$ bzw. von 0 bis $y_m$ erstrecken. Die Kamerafläche 50 ist nun in Teilflächen 52, 54, 56 und 58 unterteilt, die sich gegenseitig überlappen. Die Seitenlängen der Teilflächen 52, 54, 56 und 58 entstehen hier aus der Seitenlänge der ursprünglichen Seitenfläche 50 durch Teilung nach dem Goldenen Schnitt. Das bedeutet in FIG 6, daß die Strecke von 0 bis x2 das geometrische Mittel sowohl der Strecke von 0 bis $x_m$ als auch der Strecke von $x_2$ bis $x_m$ ist. Entsprechendes gilt für die Strecke $x_l$ bis $x_m$.

Innerhalb jeder Teilfläche 52, 54, 56, 58 wird nun an einem Ort die Likelihood-Funktion bestimmt. Bei der Teilung nach dem Goldenen Schnitt wird die Likelihood-Funktion an Punkt 60 mit den Koordinaten $(x_l, y_l)$, an Punkt 62 mit den Koordinaten $(x_2, y_l)$, an Punkt 64 mit den Koordinaten $(x_l, y_2)$ sowie an Punkt 66 mit den Koordinaten $(x_2, y_2)$ berechnet. Das Teilintervall, worin der größte Wert der Liklihood-Funktion liegt, wird nun weiter unterteilt und untersucht. Diese Teilfläche wird nun nach demselben Schema wieder in überlappende Teilflächen aufgeteilt, in denen wiederum an einem Ort der größte Wert der Likelihood-Funktion bestimmt wird. Die weitere Unterteilung wird abgebrochen, wenn die Seitenlängen der Teilflächen dem Abstand der Vergleichs-Szintillationgsereignisse entsprechen.

Bei jedem Teilungsschritt nach dem goldenen Schnitt wird das Suchintervall auf 62 % der vorhergehenden Länge verkürzt. Im vorliegenden zweidimensionalen Fall wird also der Flächeninhalt bei jedem Schritt auf ca. 38 % des ursprünglichen Flächeninhalts verkleinert. Die Anzahl der benötigten Suchschritte ist gleich der Anzahl der Teilungen, die notwendig sind, bis die Gesamtfläche der Kamera auf die Pixelfläche reduziert ist, d.h., die Seite einer Teilfläche ist gleich dem Abstand der Vergleichs-Szintillationsereignisse. Bei dem vorstehend schon erwähnten ersten Beispiel werden mit den zweiten Ortungsverfahren zehn Suchschritte benötigt, während bei dem zweiten Beispiel elf Suchschritte erforderlich sind. Damit ergibt sich für das erste Beispiel ein Faktor von 1000, um den die Zeit zur Ortung gegenüber dem direkten Verfahren verkürzt wird. Ferner erkennt man, daß die notwenige Zahl der Schritte mit wachsender Kamerafläche nur unwesentlich anwächst.

## Patentansprüche

1. Verfahren zur Ortung eines Szintillationsereignisses in einer Gamma-Kamera mit einer über einer Kamerafläche angeordneten Anzahl von Photomultiplizierern ($PM_l, PM_i, PM_N$), aus deren Ausgangssignalen ($S_l, S_i, S_N$) zusammen mit Vergleichssignalsätzen, die von Vergleichs-Szintillationsereignissen mit ortsbekannten Ursprüngen erzeugt worden sind, eine ortsabhängige Wahrscheinlichkeitsfunktion gebildet wird, wobei der Ort des Maximums der Wahrscheinlichkeitsfunktion als Ort des Szintillationsereignisses registriert wird, **dadurch gekennzeichnet,** daß durch eine grobe Vorortung zunächst eine Kamerateilfläche vorgegeben wird, in der mit großer Wahrscheinlichkeit der Ort des Szintillationsereignisses liegt und in der dann mit Hilfe der Wahrscheinlichkeitsfunktion der Ort des Szintillationsereignisses bestimmt wird.

2. Verfahren nach Anspruch 1, **dadurch gekennzeichnet,** daß die Kamerateilfläche mindestens die Beobachtungsfläche des Photomultiplizierers ($PM_i$) umfaßt, dessen Ausgangssignal ($S_i$) am größten ist.

3. Verfahren nach Anspruch 1 oder 2, **dadurch gekennzeichnet,** daß die Kamerateilfläche quadratisch ist und der Mittelpunkt (40) der Kamerateilfläche mit dem Mittelpunkt der Beobachtungsfläche des Photomultiplizierers mit dem größten Ausgangssignal zusammenfällt und daß die Seitenlänge der Kamerateilfläche in der Größenordnung des doppelten Durchmessers eines Photomultiplizierers ($PM_I$,$PM_i$, $PM_N$) liegt.

4. Verfahren nach einem der Ansprüche 1 bis 3, **dadurch gekennzeichnet,** daß in einem ersten Schritt in der Kamerateilfläche zunächst die Wahrscheinlichkeitsfunktion in einem groben Raster (42) bestimmt wird und daß dann in einem zweiten Schritt um den Rasterpunkt (44) mit dem größten Wert der Wahrscheinlichkeitsfunktion eine weitere, kleinere Kamerateilfläche gelegt wird, in der dann in einem feineren Raster (45) die Wahrscheinlichkeitsfunktion bestimmt wird.

5. Verfahren nach Anspruch 4, **dadurch gekennzeichnet,** daß in weiteren Schritten die Kamerateilflächen und das Raster weiter verkleinert werden, bis das Raster (48) gleich dem Abstand der VergleichsSzintillationsereignisse ist.

6. Verfahren nach Anspruch 4 oder 5, **dadurch gekennzeichnet,** daß die Raster (42,45,48) der verschiedenen Schritte keine gemeinsame Punkte aufweisen.

7. Verfahren nach Anspruch 5 oder 6, **dadurch gekennzeichnet,** daß das grobe Raster (42) im ersten Schritt dem 8fachen Abstand, daß das feinere Raster (45) im zweiten Schritt dem 6fachen Abstand und daß das feinste Raster (48) im letzten Schritt dem Abstand der Vergleichs-Szintillationsereignisse entspricht.

8. Verfahren zur Ortung eines Szintillationsereignisses in einer Gamma-Kamera mit einer über einer Kamerafläche (50) angeordneten Anzahl von Photomultiplizieren ($PM_I$, $PM_i$,$PM_N$), aus deren Ausgangssignalen ($S_I$,$S_i$,$S_N$) zusammen mit Vergleichssignalsätzen, die von Vergleichs-Szintillationsereignissen mit ortsbekannten Ursprüngen erzeugt worden sind, eine ortsabhängige Wahrscheinlichkeitsfunktion gebildet wird, wobei der Ort des Maximums der Wahrscheinlichkeitsfunktion als Ort des Szintillationsereignisses registriert wird, **dadurch gekennzeichnet,** daß die Kamerafläche (50) in sich gegenseitig überlappende Kamerateilflächen (52,54,56,58) aufgeteilt ist, daß innerhalb jeder Teilfläche an einem Punkt (60,62,64,66) die Wahrscheinlichkeitsfunktion bestimmt wird und daß die Teilfläche, in der die Wahrscheinlichkeitsfunktion den größten Wert hat, weiter in sich gegenseitig überlappende Kamerateilflächen unterteilt wird, wobei die Unterteilung abgebrochen wird, wenn die Seitenlängen der Kamerateilflächen den Abstand der Vergleichs-Szintillationsereignisse erreicht haben.

9. Verfahren nach Anspruch 8, **dadurch gekennzeichnet,** daß die Kamerafläche (50) bzw. die Kamerateilflächen rechteckig sind und in vier gleiche Teilflächen (52,54,56,58) unterteilt sind und daß die Wahrscheinlichkeitsfunktion an den Schnittpunkten (60,62, 64,66) der Seiten der Teilflächen (52,54,56,58) bestimmt wird.

10. Verfahren nach Anspruch 9, **dadurch gekennzeichnet,** daß die Seitenlängen einer Kamerateilfläche aus den Seiten der Kamerafläche bzw. der größeren Kamerateilfläche durch Teilung nach dem Goldenen Schnitt entsteht.

11. Verfahren nach einem der Ansprüche 1 bis 10, **dadurch gekennzeichnet,** daß jeder Vergleichssignalsatz die Mittelwerte der Ausgangssignale eines Vergleichs-Szintillationsereignisses umfaßt, daß die Wahrscheinlichkeitsfunktion jeweils aus den Wahrscheinlichkeiten berechnet wird, die die Ausgangssignale aller Photomultiplizierer ($PM_I$,$PM_i$,$PM_N$) aufweisen, und daß die Wahrscheinlichkeit eines Ausgangsssignals jeweils aus dem Mittelwert und dem Ausgangssignal ($S_I$,$S_i$,$S_N$) über eine Verteilungsfunktion berechnet wird.

12. Verfahren nach Anspruch 11, **dadurch gekennzeichnet,** daß jeder Vergleichssignalsatz die Standardabweichungen der Ausgangssignale der Vergleichs-Szintillationsereignisse umfaßt und daß die Verteilungsfunktion eine Gaußsche Verteilungsfunktion ist.

**Claims**

1. Method for locating a scintillation event in a gamma camera having a number of photomultipliers ($PM_1, PM_i, PM_N$) arranged over a camera surface, from the output signals ($S_1, S_i, S_N$) of which photomultipliers together with comparative signal sets, which have been generated from comparative scintillation events with origins of known locations, a location-dependent probability function is formed, with the location of the maximum of the probability function being recorded as the location of the scintillation event, characterised in that by rough pre-location in the first instance a partial camera surface is defined, in which surface with great probability lies the location of the scintillation event and in which surface then with the aid of the probability function the location of the scintillation event is determined.

2. Method according to claim 1, characterised in that the partial camera surface includes at least the observation surface of the photomultiplier ($PM_i$) having the greatest output signal ($S_i$).

3. Method according to claim 1 or 2, characterised in that the partial camera surface is square and the centre point (40) of the partial camera surface coincides with the centre point of the observation surface of the photomultiplier which has the greatest output signal and in that the side length of the partial camera surface lies in the order of magnitude of twice the diameter of a photomultiplier ($PM_1, PM_i, PM_N$).

4. Method according to one of the claims 1 to 3, characterised in that in a first step in the first instance the probability function is determined in the partial camera surface in a coarse raster (42) and in that then in a second step there is laid about the raster point (44) which has the greatest value of the probability function a further comparatively small partial camera surface in which then the probability function is determined in a finer raster (45).

5. Method according to claim 4, characterised in that in further steps the partial camera surfaces and the raster are further diminished until the raster (48) is equal to the interval of the comparative scintillation events.

6. Method according to claim 4 or 5, characterised in that the rasters (42,45,48) of the different steps have no common points.

7. Method according to claim 5 or 6, characterised in that the coarse raster (42) in the first step corresponds to eight times the interval, in that the finer raster (45) in the second step corresponds to six times the interval and in that the finest raster (48) in the last step corresponds to the interval of the comparative scintillation events.

8. Method for locating a scintillation event in a gamma camera having a number of photomultipliers ($PM_1, PM_i, PM_N$) arranged over a camera surface (50), from the output signals ($S_1, S_i, S_N$) of which photomultipliers together with comparative signal sets, which have been generated from comparative scintillation events with origins of known locations, a location-dependent probability function is formed, with the location of the maximum of the probability function being recorded as the location of the scintillation event, characterised in that the camera surface (50) is divided up into overlapping partial camera surfaces (52,54,56,58), in that within each partial surface the probability function is determined at one point (60,62,64,66) and in that the partial surface, in which the probability function has the greatest value, is further subdivided into overlapping partial camera surfaces, with the subdivision being aborted when the side lengths of the partial camera surfaces have attained the interval of the comparative scintillation events.

9. Method according to claim 8, characterised in that the camera surface (50) or the partial camera surfaces are rectangular and are subdivided into four equal partial surfaces (52,54,56,58) and in that the probability function is determined at the points of intersection (60,62,64,66) of the sides of the partial surfaces (52,54,56,58).

10. Method according to claim 9, characterised in that the side lengths of a partial camera surface arise from the sides of the camera surface or the greater partial camera surface by means of division according to the golden section.

11. Method according to one of the claims 1 to 10, characterised in that each comparative signal set includes

9

the mean values of the output signals of a comparative scintillation event, in that the probability function is calculated in each case from the probabilities of the output signals of all the photomultipliers ($PM_1$,$PM_i$,$PM_N$) and in that the probability of an output signal is calculated in each case from the mean value and the output signal ($S_1$,$S_i$,$S_N$) by way of a distribution function.

**12.** Method according to claim 11, characterised in that each comparative signal set includes the standard deviations of the output signals of the comparative scintillation events and in that the distribution function is a Gaussian distribution function.

**Revendications**

**1.** Procédé pour localiser un phénomène de scintillation dans une caméra gamma comportant un certain nombre de photomultiplicateurs ($PM_1$, $PM_i$, $PM_N$) qui sont disposés au-dessus d'une surface de la caméra, selon lequel une fonction de propabilité dépendant du lieu est formée à partir des signaux de sortie ($S_1$, $S_i$, $S_N$) des photomultiplicateurs ainsi que d'ensembles de signaux de comparaison, qui ont été produits par des phénomènes de scintillation de comparaison ayant des lieux d'origine connus, l'emplacement du maximum de la fonction de propabilité étant enregistré en tant que lieu du phénomène de scintillation, caractérisé par le fait que grâce à une localisation approximative préalable, on prédétermine tout d'abord une surface partielle de la caméra, dans laquelle le lieu de l'évènement de scintillation est situé avec une grande probabilité et dans laquelle on détermine alors l'emplacement du phénomène de scintillation, à l'aide de la fonction de probabilité.

**2.** Procédé suivant la revendication 1, caractérisé par le fait que la surface partielle de la caméra englobe au moins la surface d'observation du photomultiplicateur ($PM_i$), dont le signal de sortie ($S_i$) est maximum.

**3.** Procédé suivant la revendication 1 ou 2, caractérisé par le fait que la surface partielle de la caméra est carrée et que le centre (40) de la surface partielle de la caméra coïncide avec le centre de la surface d'observation du photomultiplicateur fournissant le signal de sortie maximum, et que la longueur des côtés de la surface partielle de la caméra est de l'ordre du double du diamètre d'un photomultiplicateur ($PM_1$, $PM_i$, $PM_N$).

**4.** Procédé suivant l'une des revendications 1 à 3, caractérisé par le fait que lors d'une première étape, on détermine tout d'abord, dans la surface partielle de la caméra, la fonction de probabilité selon une trame grossière (42) et qu'ensuite, lors d'une seconde étape, on place autour du centre (44) de la trame présentant la valeur maximale de la fonction de probabilité, une autre surface partielle plus petite de la caméra, dans laquelle on détermine alors, dans une trame plus fine (45), la fonction de probabilité.

**5.** Procédé selon la revendication 4, caractérisé par le fait que lors d'autres étapes, on réduit de plus en plus les surfaces partielles de la caméra et la trame jusqu'à ce que la trame (48) soit égale à la distance entre les phénomènes de scintillation de comparaison.

**6.** Procédé suivant la revendication 4 ou 5, caractérisé par le fait que les trames (42, 45, 48) ne possèdent aucun point commun dans les différentes étapes.

**7.** Procédé suivant la revendication 5 ou 6, caractérisé par le fait que la trame grossière (42) utilisée lors de la première étape correspond à 8 fois la distance entre les phénomènes de scintillation de comparaison, que la trame plus fine (45) utilisée lors de la seconde étape correspond à 6 fois cette distance et que la trame la plus fine (48) lors de la dernière étape correspond à une fois cette distance.

**8.** Procédé pour localiser un phénomène de scintillation dans une caméra gamma comportant un certain nombre de photomultiplicateurs ($PM_1$, $PM_i$, $PM_N$) qui sont disposés au-dessus d'une surface (50) de la caméra, selon lequel une fonction de propabilité dépendant du lieu est formée à partir des signaux de sortie ($S_1$, $S_i$, $S_N$) des photomultiplicateurs ainsi que d'ensembles de signaux de comparaison, qui ont été produits par des phénomènes de scintillation de comparaison ayant des lieux d'origine connus, l'emplacement du maximum de la fonction de propabilité étant enregistré en tant que lieu du phénomène de scintillation, caractérisé par le fait que la surface (50) de la caméra est subdivisée en surfaces partielles (52, 54, 56, 58) qui se chevauchent mutuellement, qu'à l'intérieur de chaque surface partielle, on détermine en un point (60, 62, 64, 66) la fonction de probabilité et qu'on subdivise en outre la surface partielle, qui possède la fonction de probabilité ayant la valeur maximale, en des surfaces partielles de la caméra qui se chevauchent mutuellement, la subdivision étant interrompue lorsque les longueurs des côtés des surfaces partielles de la caméra ont atteint la distance des phénomènes de scintillation de comparaison.

9. Procédé suivant la revendication 8, caractérisé par le fait que la surface (50) et les surfaces partielles de la caméra sont rectangulaires et sont subdivisées en quatre surfaces partielles identiques (52, 54, 56, 58), et que la fonction de probabilité est déterminée au niveau des points d'intersection (60, 62, 64, 66) des côtés des surfaces partielles (52, 54, 56, 58).

10. Procédé suivant la revendication 9, caractérisé par le fait que les longueurs des côtés d'une surface partielle de la caméra sont obtenues à partir des côtés des surfaces de la caméra ou de la surface partielle la plus grande de la caméra par division selon une proportion d'or.

11. Procédé suivant l'une des revendications 1 à 10, caractérisé par le fait que chaque ensemble de signaux de comparaison comprend les valeurs moyennes des signaux de sortie d'un phénomène de scintillation de comparaison, que la fonction de probabilité est calculée respectivement à partir des probabilités, que possèdent les signaux de sortie de tous les photomultiplicateur ($PM_1$, $PM_i$, $PM_N$), et que la probabilité d'un signal de sortie est calculée respectivement à partir de la valeur moyenne et du signal ($S_1$, $S_i$, $S_N$), par l'intermédiaire d'une fonction de distribution.

12. Procédé selon la revendication 11, caractérisé par le fait que chaque ensemble de signaux de comparaison comprend des écarts-types des signaux de sortie des évènements de scintillation de comparaison et que la fonction de distribution est une fonction de distribution gaussienne.

FIG 1

FIG 2

FIG 3

FIG 4

FIG 5

FIG 6